# EUROPEAN PATENT APPLICATION

(11) **EP 4 351 202 A1**
(43) Date of publication of application: **10.04.2024**
(21) Application number: 22831877.0
(22) Date of filing: 24.06.2022
(51) Int. Cl.: H04W 24/02

(54) **METHOD FOR DETERMINING COVERAGE LAYER CELL, ELECTRONIC DEVICE, AND COMPUTER-READABLE MEDIUM**

(30) Priority: 29.06.2021 CN 202110727284
(71) Applicant: ZTE Corporation, Shenzhen, Guangdong 518057 (CN)
(72) Inventor: ZHAN, Yong, Shenzhen, Guangdong 518057 (CN)
(74) Representative: Canzler & Bergmeier Patentanwälte Partnerschaft mbB
(86) International application number: PCT/CN2022/101109
(87) International publication number: WO 2023/274063

(57) **Abstract**

The present disclosure provides a method for determining a coverage layer cell, comprising: transmitting a cell measurement indication to a terminal connected to a target cell (S1); receiving a measurement report reported by the terminal, and, according to all reported measurement reports, determining a neighboring cell set at least partially coincident with a coverage layer of the target cell (S2); according to a preset cell type and all measurement reports, determining a hit cell in the neighboring cell set (S3); transmitting a first coverage layer acknowledgement request to all hit cells, and in response to a first coverage layer acknowledgement response fed back by any cell of all the hit cells, determining the cell to be a coverage layer cell (S4). The present disclosure also provides an electronic device and a computer readable medium.

## Description

### TECHNICAL FIELD

The present disclosure relates to the technical field of communications, and in particular, to a method for determining a coverage layer cell, an electronic device, and a computer-readable medium.

### BACKGROUND

In general, a coverage layer cell is configured for each cell with a manual configuration method, a method of designating a specific frequency point for basic coverage, or a method of directly taking a neighboring cell as the coverage layer cell. As for the manual configuration method, performing manual planning of the coverage layer cell for every cell one by one is low in efficiency and manpower consumption therefor is difficult to be estimated because a quantity of cells is large, and prior knowledge is also needed in planning, so that the manual configuration method does not meet a condition for popularization. As for the method of designating the specific frequency point for basic coverage, it is impossible to ensure that there is no a coverage hole, and coverage effects and corresponding capabilities of supporting communication services cannot be guaranteed; and in particular, in order to solve a problem of decreasing energy efficiency of a wireless cellular cell, an important technique for increasing the energy efficiency of the cell is turning off the cell when the cell is idle to save energy as much as possible and waking the cell up timely when the cell becomes busy to ensure no damage to user experience. As for the method of directly taking the neighboring cell as the coverage layer cell, when the method is used for configuring the coverage layer cell for an energy saving cell, a problem that a quantity of cells that can be turned off is reduced and an energy saving effect is reduced may occur.

### SUMMARY

An embodiment of the present disclosure provides a method for determining a coverage layer cell, including: sending a cell measurement instruction to terminals connected to a target cell, with the cell measurement instruction including a plurality of measurement frequency points; receiving measurement reports reported by the terminals, and determining a neighboring cell set at least partially overlapping a coverage layer of the target cell according to all the reported measurement reports; determining hit cells in the neighboring cell set according to preset cell types and all the measurement reports; and sending a first coverage layer acknowledge request to all the hit cells, and determining, in response to a first coverage layer acknowledge response fed back by any one hit cell of all the hit cells, the hit cell as the coverage layer cell.

An embodiment of the present disclosure further provides an electronic device, including: one or more processors; and a memory configured to store one or more programs. When the one or more programs are executed by the one or more processors, the one or more processors perform the method for determining the coverage layer cell according to the present disclosure.

An embodiment of the present disclosure further provides a computer-readable medium having a computer program stored thereon. When the computer program is executed by a processor, the processor is caused to perform the method for determining the coverage layer cell according to the present disclosure.

### BRIEF DESCRIPTION OF DRAWINGS

FIG. 1 is a flowchart illustrating a method for determining a coverage layer cell according to the present disclosure;
FIG. 2 is a flowchart illustrating a specific implementation of operation S2 in a method for determining a coverage layer cell according to the present disclosure;
FIG. 3 is a flowchart illustrating a specific implementation of operation S3 in a method for determining a coverage layer cell according to the present disclosure;
FIG. 4 a flowchart illustrating a specific implementation of operation S302 in a method for determining a coverage layer cell according to the present disclosure;
FIG. 5 is another flowchart illustrating a method for determining a coverage layer cell according to the present disclosure;
FIG. 6 is another flowchart illustrating a method for determining a coverage layer cell according to the present disclosure;
FIG. 7 is a schematic structural diagram of an electronic device according to the present disclosure; and
FIG. 8 is a schematic structural diagram of a computer-readable medium according to the present disclosure.

### DETAIL DESCRIPTION OF EMBODIMENTS

In order to enable those of ordinary skill in the art to better understand the technical solutions of the present disclosure, a method for determining a coverage layer cell, an electronic device, and a computer-readable medium provided by the present disclosure will be described in detail below with reference to the drawings.

Exemplary implementations will be described more fully below with reference to the drawings, but the exemplary implementations described herein may be embodied in different forms and should not be interpreted as being limited to the implementations described herein. Rather, the implementations are provided to make the present disclosure thorough and complete, and are intended to enable those of ordinary skill in the art to fully understand the scope of the present disclosure.

The terms used herein are merely used to describe specific implementations, and are not intended to limit the present disclosure. As used herein, "a" and "the" which indicate a singular form are intended to include a plural form, unless expressly stated in the context. It should be further understood that the term(s) "include" and/or "be made of" used herein indicate(s) the presence of the described features, integers, operations, elements and/or components, but do not exclude the presence or addition of one or more other features, integers, operations, elements, components and/or combinations thereof.

It should be understood that the terms "first", "second" and the like may be used herein to describe various elements, but those elements are not limited by those terms. Those terms are merely used for distinguishing one element from the other element. Therefore, without departing from the teaching of the present disclosure, a first element, a first component, or a first module described below can also be called a second element, a second component, or a second module.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

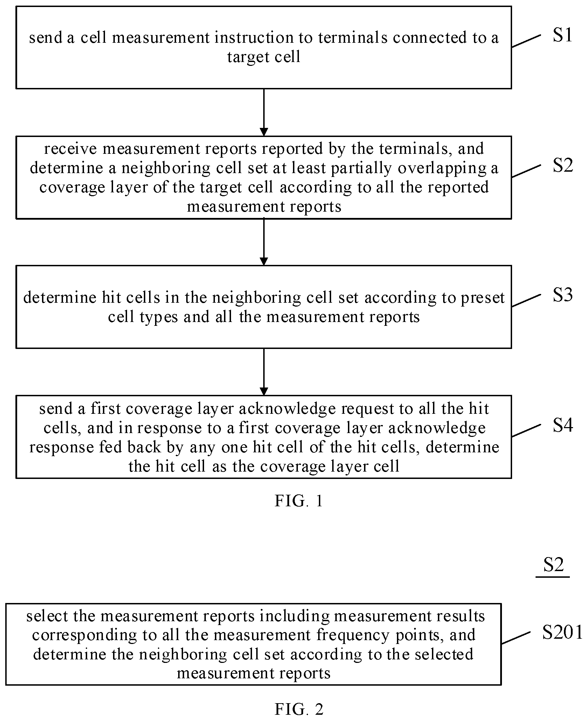

FIG. 1 is a flowchart illustrating a method for determining a coverage layer cell according to the present disclosure. The method is applicable to a network side; and specifically, the method is applicable to a target cell, a control plane device corresponding to the target cell, and a base station to which the target cell belongs. As shown in FIG. 1, the method includes operations S1 to S4.

In operation S1, a cell measurement instruction is sent to terminals connected to a target cell.

The cell measurement instruction may include a plurality of measurement frequency points. The cell measurement instruction is configured to instruct the terminals to measure cells corresponding to respective measurement frequency points within one measurement period. The cell measurement instruction may further include the measurement period, which corresponds to life cycles of the terminals or an entire time period during which a frequency measurement function is enabled. Specifically, a life cycle of a terminal is a whole time period from the terminal getting access to the target cell to the terminal being switched to an idle state, entering an inactive state, or being switched to another cell.

The measured cells may include a cell employing the same radio access technology as the target cell and a cell employing a different radio access technology relative to the target cell, and the radio access technologies may include the 2G technology, the 3G technology, the 4G technology, the 5G technology, etc.

The measurement frequency points carried by the cell measurement instruction may include a frequency point corresponding to the target cell, according to which the terminals measure other cells corresponding to the frequency point and also measure the target cell.

Sending the cell measurement instruction to the terminals connected to the target cell (i.e., the operation S1) may include sending the cell measurement instruction to all terminals connected to the target cell.

In operation S2, measurement reports reported by the terminals are received, and a neighboring cell set at least partially overlapping a coverage layer of the target cell is determined according to all the reported measurement reports.

The measurement reports may include a cell measured according to at least one of the measurement frequency points or other measurement results. From the perspective of user perception, a coverage layer of a cell represents signal coverage of the cell; and from the perspective of a control plane of a network, the coverage layer of the cell represents carrier signal power adapted to the signal coverage.

A neighboring cell at least partially overlapping the coverage layer of the target cell is a cell whose signal coverage partially or completely overlaps signal coverage of the target cell, and the neighboring cell set is a set formed by all neighboring cells. A coverage layer cell of the target cell refers to a cell capable of providing signals and communication service support for a terminal which is located within the signal coverage of the target cell and currently has accessed to the target cell or may access the target cell in future.

The neighboring cell set may be generated from all the cells indicated in all the measurement reports reported by all the terminals. For example, when measurement at a corresponding measurement frequency point is not supported, or when no cell corresponding to the corresponding measurement frequency point is detected, or when signal strength of a detected cell corresponding to the corresponding measurement frequency point is less than a signal strength threshold, a terminal does not report the measurement report and merely reports a valid accessible cell. Thus, at a network side, the neighboring cell set may be directly generated from all the cells indicated in all the measurement reports reported by all the terminals; or, the neighboring cell set may be generated from all the cells that are indicated in all the measurement reports reported by all the terminals and have device distances to the target cell less than a preset threshold; or, the neighboring cell set may be generated from all the cells that are indicated in all the measurement reports reported by all the terminals and have signal strength measured by the terminals greater than a preset threshold; or, the neighboring cell set may be generated from all the cells that are indicated in all the measurement reports reported by all the terminals and employ the same radio access technology as the target cell.

In operation S3, hit cells in the neighboring cell set are determined according to preset cell types and all the measurement reports.

The operations S2 and S3 correspond to a process of finding the coverage layer cell. The hit cells refer to candidate cells in the neighboring cell set which are predicted to possibly be the coverage layer cell.

The cell types may be obtained according to types of the radio access technologies corresponding to cells; or the cell types may correspond to respective measurement frequency points; or the cell types may be obtained according to combinations of the types of the radio access technologies and the measurement frequency points; or the cell types may be related to an operator; or the cell types may be obtained according to a hardware component corresponding to a cell, for example, whether the cell includes a Radio Remote Unit (RRU) or a Building Baseband Unit (BBU), and whether the cell shares a radio frequency device with other cells. It should be noted that the above description of the ways of determining the cell types and the specific cell types are merely the description of alternative implementations provided by the present disclosure, and does not limit the technical solutions of the present disclosure, and other cell types and other ways of determining the cell types are also applicable to the technical solutions of the present disclosure.

In operation S4, a first coverage layer acknowledge request is sent to all the hit cells, and in response to a first coverage layer acknowledge response fed back by any one hit cell of the hit cells, the hit cell is determined as a coverage layer cell.

The operation S4 corresponds to a process of confirming the coverage layer cell. The first coverage layer acknowledge response is a coverage layer acknowledge success response, and represents that the hit cell sending the response is in an online state and thus can be used as the coverage layer cell of the target cell.

If a coverage layer acknowledge failure response sent by the hit cell is received, the hit cell is marked as being unavailable, so that the hit cell can be excluded when confirmation of the coverage layer cell is performed again later; or, after a preset time period elapses and/or when a quantity of retransmission times of the first coverage layer acknowledgement request is greater than or equal to a preset maximum quantity of retransmission times, if no first coverage layer acknowledgement response is received from the hit cell, the hit cell is marked as being unavailable. For example, a timer may be set, and trigger duration of the timer may be set according to the preset time period and the preset maximum quantity of retransmission times.

The present disclosure provides the method for determining the coverage layer cell, which can achieve independent, automatic, and accurate determination of the coverage layer cell and dynamic configuration of the coverage layer cell for the target cell.

FIG. 2 is a flowchart illustrating a specific implementation of the operation S2 in the method for determining a coverage layer cell according to the present disclosure. Specifically, the measurement report reported by each terminal may include a measurement result of the measurement performed by the terminal at at least one of the measurement frequency points. As shown in FIG. 2, the operation S2 of determining the neighboring cell set at least partially overlapping the coverage layer of the target cell according to all the reported measurement reports may include operation S201.

In the operation S201, the measurement reports including measurement results corresponding to all the measurement frequency points are selected, and the neighboring cell set is determined according to the selected measurement reports.

If a measurement report carries the measurement result corresponding to each measurement frequency point, it is indicated that the terminal completes at least one round of measurement on all the measurement frequency points within the corresponding measurement period according to the received cell measurement instruction. Specifically, since measurement time and a measurement start moment which correspond to each measurement frequency point are different, for the different frequency points, the terminal may complete different rounds of measurement within the measurement period; and since channel environments when the frequency points are measured may be different and locations of the terminal may be different, cells in each round of measurement may also be different.

The measurement result may include: a cell identification and/or a measurement mark. The cell identification is an identification of a cell detected at the corresponding measurement frequency point, and one measurement frequency point may correspond to a plurality of cells whose respective cell identifications are different. The cell identification may be an identification preconfigured by a communication network system when the cell is online or an identification temporarily configured for current measurement. The measurement mark represents unsuccessful measurement, and the unsuccessful measurement includes: a case where the terminal does not support the measurement at the corresponding measurement frequency point, or a case where no cell is found when the measurement is performed at the corresponding measurement frequency point (that is, the measurement mark may be configured to indicate that the terminal cannot perform the measurement at the corresponding measurement frequency point), or a case where no cell is detected at the corresponding measurement frequency point, and those cases respectively correspond to a situation that the terminal merely supports measurement at part of the frequency points due to reasons of hardware or software, and a situation that the terminal is in a signal coverage hole of the cells corresponding to part of the frequency points. The measurement mark may be abstract identification information, and may be embodied in various forms such as a flag bit, a label, and a specific field at the corresponding measurement frequency point.

The unsuccessful measurement may further include a case where the signal strength of the cell detected at the corresponding measurement frequency point is less than or equal to the preset signal strength threshold (that is, the measurement mark may be further configured to indicate that the terminal completes the measurement at the corresponding measurement frequency point but the signal strength of the detected cell is relatively low). In a case where the signal strength of the cell detected by the terminal at the corresponding measurement frequency point is greater than the signal strength threshold, the corresponding cell identification is added to the measurement report. The corresponding signal strength is carried while adding the cell identification.

When the measurement report is stored at the network side, the signal strength and the measurement mark may be discarded, with merely the cell identification corresponding to the measurement frequency point being stored, and a data bit corresponding to the measurement mark is set as a null value or another set value.

The cell measurement instruction may further include a measurement parameter for indicating a measurement object of the terminals or a measurement method which the terminals need to adopt. For example, the measurement parameter may include: Reference Signal Received Power (RSRP) of a Synchronization Signal/PBCH Block (SSB), RSRP of a Channel State Information-Reference Signal (CSI-RS), or RSRP of a Cell-specific Reference Signal (CRS).

Every time a terminal completes one time of the measurement at one measurement frequency point, the terminal reports a measurement report on such time of the measurement at the measurement frequency point. Correspondingly, the measurement report is stored at the network side according to a terminal identification, and all the measurement results corresponding to one terminal identification are subjected to overall assessment for being screened. Or, every time the terminal completes one round of the measurement at all the measurement frequency points within the measurement period, the terminal reports an overall measurement report.

Determining the neighboring cell set according the selected measurement reports (i.e., the operation S201) may include: generating the neighboring cell set according to all cell identifications in the selected measurement reports. The neighboring cell set is generated based on the measurement results which are screened out, and is analyzed and confirmed through data with high integrity. The neighboring cell set may also be referred to as a neighboring cell identification set, which includes all the cell identifications in the measurement results which are screened out, so as to point to the corresponding cells according to the cell identifications.

Determining the neighboring cell set according to the selected measurement reports (i.e., the operation S201) may further include: respectively verifying legality of the cells corresponding to all the cell identifications in the neighboring cell set, so as to avoid wrong information fed back by pseudo base stations and other fake wireless communication devices.

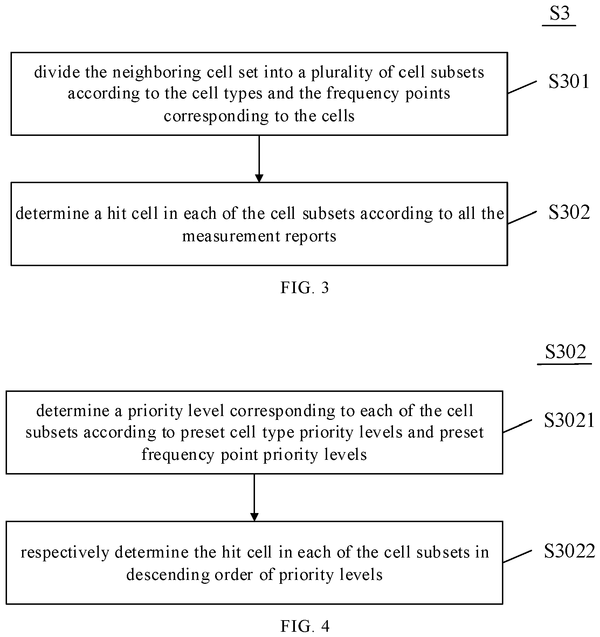

FIG. 3 is a flowchart illustrating a specific implementation of the operation S3 in the method for determining a coverage layer cell according to the present disclosure. As shown in FIG. 3, the operation S3 of determining the hit cells in the neighboring cell set according to the preset cell types and all the measurement reports may include operations S301 and S302.

In operation S301, the neighboring cell set is divided into a plurality of cell subsets according to the cell types and the frequency points corresponding to the cells.

Each of the cell subsets may correspond to a different combination of the cell type and the frequency point. The cell subsets may also be referred to as cell identification subsets, so as to point to the corresponding cells according to the cell identifications. Deriving the cell types from the types of the radio access technologies corresponding to the cells may include: determining, based on the 2G, 3G, 4G, and 5G radio access technologies (e.g., the New Radio (NR, also referred to as 5G NR) technology, and the Long Term Evolution (LTE) technology), the plurality of cell subsets respectively corresponding to different combinations of the cell types and the frequency points, such as NR_2.6G, NR_700M, and LTE_2.6G.

In operation S302, a hit cell in each of the cell subsets is determined according to all the measurement reports.

The hit cells respectively corresponding to all the combinations of the cell types and the frequency points are determined according to all the reported measurement reports, which can emphasize a frequency property in the process of determining the hit cells, and facilitate subsequent processes of determining coverage layer cells respectively corresponding to all the combinations of the cell types and the frequency points and determining a communication service or a system task of which each coverage layer cell can take charge in a corresponding scene.

FIG. 4 is a flowchart illustrating a specific implementation of the operation S302 in the method for determining a coverage layer cell according to the present disclosure. As shown in FIG. 4, the operation S302 of determining the hit cell in each of the cell subsets according to all the measurement reports may include operations S3021 and S3022.

In operation S3021, a priority level corresponding to each of the cell subsets is determined according to preset cell type priority levels and preset frequency point priority levels.

The cell type priority levels may be preconfigured according to a service policy of the coverage layer cell. For example, in a case where the service policy of the coverage layer cell is to replace the target cell to provide communication services and ensure service quality when the target cell is turned off or has poor signal performance, the closer a cell type is to the cell type of the target cell, the higher a cell type priority level correspondingly configured for the cell type is. As another example, in a case where the service policy of the coverage layer cell is to replace the target cell to provide basic communication services (such as basic voice calls and short message services) when the target cell is turned off or has poor signal performance, in order to save system resources, the closer a cell type is to the cell type of the cell merely providing the basic communication services, the higher the cell type priority level correspondingly configured for the cell type is. It should be noted that the above description of the ways of configuring the cell type priority levels and the service policy of the coverage layer cell are merely the operation of alternative implementations provided by the present disclosure, and does not limit the technical solutions of the present disclosure, and other ways of configuring the cell type priority levels and other service policies of the coverage layer cell are also applicable to the technical solutions of the present disclosure.

The frequency point priority levels are related to numeric values corresponding to the frequency points, for example, the smaller a numeric value corresponding to a frequency point is, the higher a frequency point priority level is.

A priority level may also be preconfigured for a corresponding combination of the cell types and the frequency points.

In operation S3022, the hit cell in each of the cell subsets is respectively determined in descending order of priority levels.

For any one of the cell subsets, all the existing measurement reports are traversed to determine an occurrence quantity of the cell identification of each cell in the cell subset, the cell corresponding to the cell identification with the maximum occurrence quantity is at least determined as the hit cell, and a measurement result carrying the cell identification of the hit cell is deleted. Thus, the higher the priority level of the cell subset is, the large a quantity of samples in the measurement results for the cell subset is, the stronger causality between the determined hit cell and the measurement result is; and moreover, processing time can be reduced, and processing efficiency can be increased.

Determining at least the cell corresponding to the cell identification with the maximum occurrence quantity as the hit cell may include: determining the cell corresponding to the cell identification with the maximum occurrence quantity as the hit cell, or determining cells corresponding to two cell identifications with first two largest occurrence quantities as the hit cells.

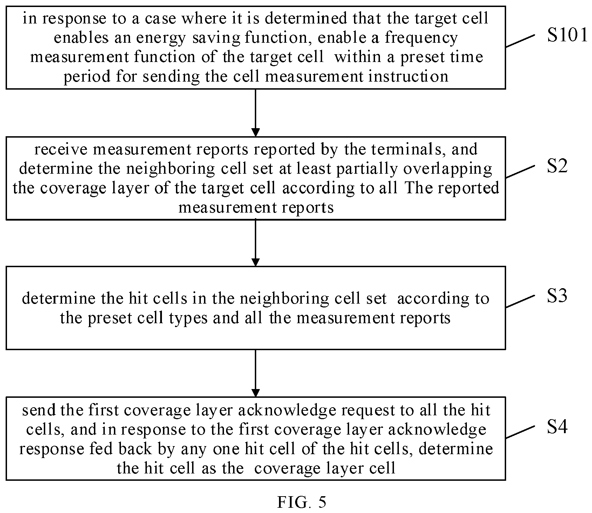

FIG. 5 is another flowchart illustrating the method for determining a coverage layer cell according to the present disclosure. The method is an alternative implementation based on the method shown in FIG. 1. Specifically, the target cell is an energy saving cell which is turned off periodically or is turned off by triggering an event, and the method shown in FIG. 5 includes the operations S2 to S4 shown in FIG. 1 and operation S101 which is a specific implementation of the operation S1 shown in FIG. 1. Merely the operation S101 is described in detail below.

In the operation S101, in response to a case where it is determined that the target cell enables an energy saving function, a frequency measurement function of the target cell is enabled within a preset time period for sending the cell measurement instruction.

After it is determined that the target cell enables the energy saving function, the frequency measurement function of the target cell is enabled within the preset time period before the target cell is turned off, so as to complete the above processes of finding and confirming the coverage layer cell. The preset time period may be set by setting the timer.

In the case where the target cell is the energy saving cell, determining the hit cells in the neighboring cell set according to the preset cell types and all the measurement reports (i.e., the operation S3) may include: excluding the energy saving cell from the neighboring cell set, and determining the hit cells in the neighboring cell set obtained after the excluding is completed. Thus, a situation that the coverage layer cell of the energy saving cell is also the energy saving cell and communication services cannot be supported when the energy saving cell and the coverage layer cell thereof are simultaneously turned off can be prevented, which can ensure that an effect of the coverage layer cell can work in real time.

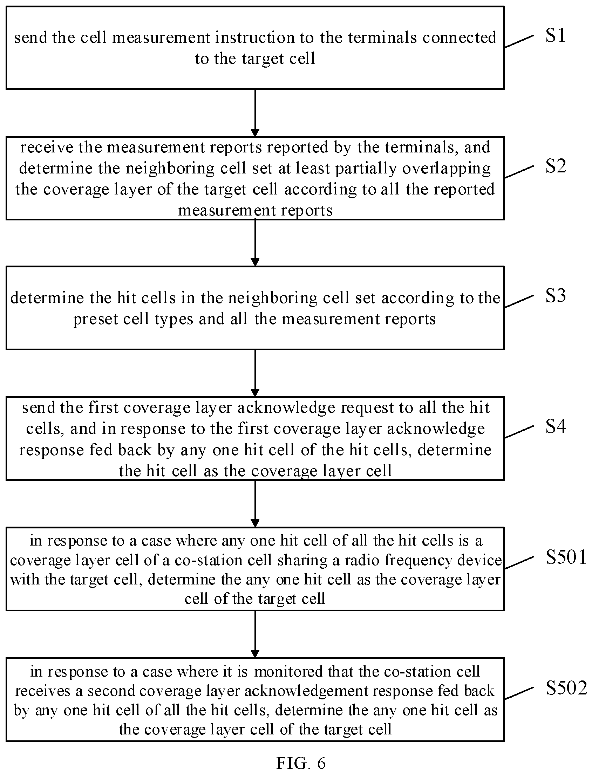

FIG. 6 is still another flowchart illustrating the method for determining a coverage layer cell according to the present disclosure. The method is an alternative implementation based on the method shown in FIG. 1. Specifically, the method shown in FIG. 6 includes the operations S1 to S4 shown in FIG. 1, and operations S501 and S502. Merely the operations S501 and S502 are described in detail below.

In operation S501, in response to a case where any one hit cell of all the hit cells is a coverage layer cell of a co-station cell sharing a radio frequency device with the target cell, the any one hit cell is determined as the coverage layer cell of the target cell.

By inquiring whether the hit cell obtained in the process of finding the coverage layer cell also serves as the coverage layer cell of the co-station cell, synchronism with the coverage layer of the co-station cell can be enhanced.

In operation S502, in response to a case where it is monitored that the co-station cell receives a second coverage layer acknowledgement response fed back by the any one hit cell of all the hit cells, the any one hit cell is determined as the coverage layer cell of the target cell.

The second coverage layer acknowledge response is an acknowledge response fed back in response to a second coverage layer acknowledge request sent by the co-station cell, that is, in a case where the co-station cell is also in the process of confirming the coverage layer cell, if the co-station cell receives the second coverage layer acknowledge response and determines the cell sending the second coverage layer acknowledge response as the coverage layer cell, the target cell also determines the cell as the coverage layer cell.

The target cell and the co-station cell sharing the radio frequency device with the target cell may simultaneously perform the above processes of finding and confirming the coverage layer cell.

In response to the case where the target cell is the energy saving cell which is turned off periodically or is turned off by triggering an event, correspondingly, the co-station cell is also the energy saving cell.

The method for determining the coverage layer cell provided herein is exemplarily described in detail below in conjunction with practical applications.

A first target cell is the energy saving cell which is turned off periodically or is turned off by triggering an event, and has the cell identification of 012600001, and the combination of the cell type and the frequency point corresponding to the first target cell is expressed as NR_2.6G; a second target cell sharing the radio frequency device with the first target cell is also the energy saving cell, and has the cell identification of 014900001, and the combination of the cell type and the frequency point corresponding to the second target cell is expressed as NR_4.9G. The first target cell and the second target cell simultaneously perform the process of determining the coverage layer cell, merely the process of determining the coverage layer cell performed by the first target cell is described in detail below, and the process of determining the coverage layer cell performed by the second target cell is similar to that performed by the first target cell.

Firstly, cell measurement and collection of the measurement reports are performed.

In response to a case where it is determined that the first target cell and the second target cell enables the energy saving function, the frequency measurement function of the first target cell is enabled within the preset time period, the first target cell sends the cell measurement instruction to all the terminals connected thereto, and the cell measurement instruction includes the plurality of measurement frequency points. A terminal that receives the cell measurement instruction respectively performs measurement at respective measurement frequency points within a current life cycle of the terminal. In a case where a cell corresponding to a measurement frequency point is an NR cell, the RSRP of the SSB of the cell is measured, and the cell identification of the cell is reported merely when the measured RSRP is greater than or equal to -100dBm; in a case where a cell corresponding to a measurement frequency point is an LTE cell, the RSRP of the CRS of the cell is measured, and the cell identification of the cell is reported merely when the measured RSRP is greater than or equal to -102dBm; and in a case where the measurement at a measurement frequency point is not supported or no cell corresponding to the measurement frequency point is detected, the corresponding measurement mark is added to the measurement frequency point (to indicate the unsuccessful measurement) and is reported. The first target cell collects the measurement reports reported by the terminals as many as possible within the preset time period, ensures that the reported measurement reports include the measurement results of all the measurement frequency points, stores the measurement results according to the terminal identifications of the terminals, and generates a terminal-measured cell complete set table. A quantity of measurement rounds corresponding to each measurement report may be determined according to reporting time, the first measurement round is denoted by R1, the second measurement round is denoted by R2, and so on; and under an attribute corresponding to a plurality of combinations of the cell types and the frequency points, the cell identifications corresponding to respective measurement frequency points reported by the terminals are recorded, see Table 1.

**Table 1 Terminal-Measured Cell Complete Set Table**

| NR_2.6G | | | | NR_4.9G | | NR_7 00M | LTE_2.6G | | LTE_2 .3G | LTE_1 .8G |
|---|---|---|---|---|---|---|---|---|---|---|
| R1 | R2 | R3 | R4 | R1 | R2 | R1 | R1 | R2 | R1 | R1 |
| 01260 | 01260 | 01260 | 01260 | 01490 | 01490 | 01070 | 00260 | 00260 | 00230 | 00180 |
| 0001 | 0001 | 0001 | 0001 | 0001 | 0001 | 0001 | 0001 | 0001 | 0001 | 0001 |
| 01260 | 01260 | 01260 | 01260 | 01490 | 01490 | 01070 | 00260 | 00260 | 00230 | |
| 0002 | 0002 | 0002 | 0002 | 0002 | 0002 | 0002 | 0002 | 0002 | 0002 | |
| 01260 | | 01260 | 01260 | | | 01070 | 00260 | 00260 | 00230 | |
| 0006 | | 0006 | 0007 | | | 0005 | 0004 | 0005 | 0005 | |
| | | 01260 | | | | 01070 | | | 00230 | |
| | | 0007 | | | | 0123 | | | 0009 | |

For example, in the first measurement round performed by a terminal: for the measurement frequency point of 2.6G, the cell identifications of the NR cells measured and reported include 012600001 (the first target cell), 012600002, and 012600006, and the cell identifications of the LTE cells measured and reported include 002600001, 002600002, and 002600004; for the measurement frequency point of 4.9G, the cell identifications of the NR cells measured and reported include 014900001 and 014900002; and for the measurement frequency point of 1.8G, the cell identification of the LTE cell measured and reported includes 001800001, and so on.

Then, the process of finding the coverage layer cell is performed.

The cells corresponding to the cell identifications in all terminal-measured cell complete set tables form the neighboring cell set together, all the cell identifications under a single combination of the cell type and the frequency point form the cell subset corresponding to such combination. The first target cell stores each cell subset in a cell list form, and determines the priority level corresponding to each cell subset, i.e., the priority level corresponding to each cell list, according to the preset cell type priority levels and the preset frequency point priority levels. For example, in the present example, it is determined that the priority levels of the cell lists corresponding to NR_2.6G and NR_4.9G are 1, the priority level of the cell list corresponding to NR_700M is 2, the priority levels of the cell lists corresponding to LTE_2.6G and LTE_2.3G are 3, and the priority level of the cell list corresponding to LTE_1.8G is 4.

The first target cell respectively determines the hit cell in each cell list in descending order of the priority levels. Taking the cell list which corresponds to LTE_1.8G and has the highest priority level as an example, the cell identifications of 001800001 to 001800005 are stored in the cell list, the cell list is imported into a temporary cell list and then is deleted, all the existing terminal-measured cell complete set tables are traversed, terminal-measured cell complete set tables each which has an intersection with the temporary cell list are screened out, the occurrence quantity of each cell identification in all screened out tables each has the intersection with the temporary cell list is counted, the cells corresponding to two cell identifications with the first two largest occurrence quantities are determined as the hit cells, and the cell identifications of the hit cells are marked as being hit in the temporary cell list. In the present example, the cell identifications of the hit cells are 001800001 and 001800002. The terminal-measured cell complete set tables which are screened out are deleted, the cell identifications of the hit cells are written to a to-be-confirmed list, and the temporary cell list is emptied. Then the hit cells in the cell lists corresponding to the other priority levels are determined. In the present example, the cell identifications of the hit cells are 001800001, 001800002, 002300001, and 002600001. Then, the to-be-confirmed list is synchronized with the second target cell.

Finally, the process of confirming the coverage layer cell is performed.

The first target cell sets the timer according to waiting time and a maximum quantity of retransmission times, and sends the coverage layer acknowledge request to all the hit cells in the to-be-confirmed list. In response to the coverage layer acknowledge response fed back by any one hit cell of all the hit cells, the hit cell is determined as the coverage layer cell, and the cell identification of the hit cell is written to a coverage layer cell list. The coverage layer cell list of the first target cell is synchronized with a coverage layer cell list of the second target cell. In response to a case where any one hit cell of all the hit cells is the coverage layer cell of the second target cell, the hit cell is determined as the coverage layer cell of the first target cell, and the cell identification of the hit cell is written to the coverage layer cell list; and in response to a case where it is monitored that the second target cell receives the coverage layer acknowledge response fed back by any one hit cell of all the hit cells, the hit cell is determined as the coverage layer cell of the first target cell, and the cell identification of the hit cell is written to the coverage layer cell list. If all the hit cells are determined as the coverage layer cells before the timer expires, the process is ended; and if there is a hit cell that has not responded before the timer expires, the hit cell is marked as being unavailable, and is excluded when the process of finding the coverage layer cell is performed again.

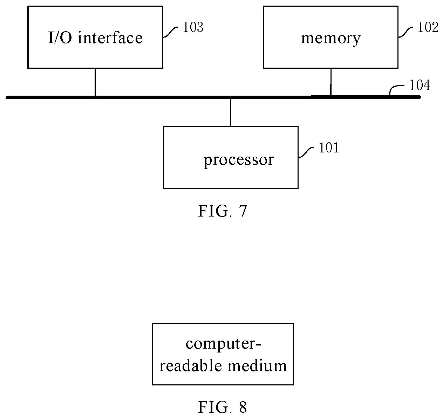

FIG. 7 is a schematic structural diagram of an electronic device according to the present disclosure. As shown in FIG. 7, the electronic device includes: one or more processors 101; and a memory 102 having one or more programs stored thereon. When the one or more programs are executed by the one or more processors 101, the one or more processors 101 implement the method for determining the coverage layer cell described in the above implementations.

The electronic device shown in FIG. 7 may further include one or more Input/Output (I/O) interfaces 103 connected between the processor 101 and the memory 102 and configured to enable information interaction between the processor 101 and the memory 102.

The processor 101 is a device having data processing capability, and includes, but is not limited to, a Central Processing Unit (CPU); the memory 102 is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the I/O interface (read/write interface) 103 is connected between the processor 101 and the memory 102, can enable the information interaction between the processor 101 and the memory 102, and includes, but is not limited to, a data bus (Bus).

The processor 101, the memory 102, and the I/O interface 103 are connected to each other through a bus 104, and then are connected to other components of a computing device.

FIG. 8 is a schematic structural diagram of a computer-readable medium according to the present disclosure. The computer-readable medium has a computer program stored thereon. When the computer program is executed by a processor, the processor is caused to implement the method for determining a coverage layer cell described in the above implementations.

It should be understood by those of ordinary skill in the art that the functional modules/units in all or some of the operations and the devices in the method disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary implementations using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular implementation can be used alone or in combination with features, characteristics and/or elements described in connection with other implementations. Therefore, it should be understood by those of ordinary skill in the art that various changes in the forms and the details can be made without departing from the scope of the present disclosure of the appended claims.

## Claims

1. A method for determining a coverage layer cell, comprising:
sending a cell measurement instruction to terminals connected to a target cell, wherein the cell measurement instruction comprises a plurality of measurement frequency points;
receiving measurement reports reported by the terminals, and determining a neighboring cell set at least partially overlapping a coverage layer of the target cell according to all the reported measurement reports;
determining hit cells in the neighboring cell set according to preset cell types and all the measurement reports; and
sending a first coverage layer acknowledge request to all the hit cells, and determining, in response to a first coverage layer acknowledge response fed back by any one hit cell of all the hit cells, the hit cell as the coverage layer cell.

2. The method for determining the coverage layer cell of claim 1, wherein a measurement report reported by each terminal comprises a measurement result of measurement performed by the terminal at at least one of the measurement frequency points, and
determining the neighboring cell set at least partially overlapping the coverage layer of the target cell according to all the reported measurement reports comprises:
selecting measurement reports comprising measurement results corresponding to all the measurement frequency points, and determining the neighboring cell set according to the selected measurement reports.

3. The method for determining a coverage layer cell of claim 2, wherein the measurement result comprises:
a cell identification, which is an identification of a cell detected at a corresponding measurement frequency point; and/or
a measurement mark, which represents unsuccessful measurement,
the unsuccessful measurement comprising: a case where the terminal does not support measurement at the corresponding measurement frequency point, or a case where no cell is found when the measurement is performed at the corresponding measurement frequency point, and
determining the neighboring cell set according to the selected measurement reports comprises:
generating the neighboring cell set according to all cell identifications in the selected measurement reports.

4. The method for determining the coverage layer cell of claim 3, wherein
the unsuccessful measurement further comprises: a case where signal strength of the cell detected at the corresponding measurement frequency point is less than or equal to a preset signal strength threshold.

5. The method for determining the coverage layer cell of claim 1, wherein determining the hit cells in the neighboring cell set according to the preset cell types and all the measurement reports comprises:
dividing the neighboring cell set into a plurality of cell subsets according to the cell types and frequency points corresponding to cells; and
determining a hit cell in each of the cell subsets according to all the measurement reports.

6. The method for determining the coverage layer cell of claim 5, wherein determining the hit cell in each of the cell subsets according to all the measurement reports comprises:
determining a priority level corresponding to each of the cell subsets according to preset cell type priority levels and preset frequency point priority levels; and
respectively determining the hit cell in each of the cell subsets in descending order of priority levels,
wherein, for any one of the cell subsets, all existing measurement reports are traversed to determine an occurrence quantity of a cell identification of each cell in the any one of the cell subsets, a cell corresponding to a cell identification with a maximum occurrence quantity is at least determined as the hit cell, and a measurement result carrying the cell identification of the hit cell is deleted.

7. The method for determining the coverage layer cell of claim 1, wherein the target cell is an energy saving cell which is turned off periodically or is turned off by triggering an event,
sending the cell measurement instruction to the terminals connected to the target cell comprises:
in response to a case where it is determined that the target cell enables an energy saving function, enabling a frequency measurement function of the target cell within a preset time period for sending the cell measurement instruction; and
determining the hit cells in the neighboring cell set according to the preset cell types and all the measurement reports comprises:
excluding the energy saving cell from the neighboring cell set, and determining the hit cells in the neighboring cell set obtained after the excluding is completed.

8. The method for determining the coverage layer cell of claim 1, further comprising:
in response to a case where any one hit cell of all the hit cells is a coverage layer cell of a co-station cell sharing a radio frequency device with the target cell, determining the any one hit cell as the coverage layer cell of the target cell; and/or
in response to a case where it is monitored that the co-station cell receives a second coverage layer acknowledgement response fed back by the any one hit cell of all the hit cells, determining the any one of all the hit cells as the coverage layer cell of the target cell, wherein the second coverage layer acknowledge response is an acknowledge response fed back in response to a second coverage layer acknowledge request sent by the co-station cell.

9. An electronic device, comprising:
one or more processors; and
a memory configured to store one or more programs;
wherein, when the one or more programs are executed by the one or more processors, the one or more processors perform the method for determining the coverage layer cell of any one of claims 1-8.

10. A computer-readable medium having a computer program stored thereon, wherein, when the computer program is executed by a processor, the processor is caused to perform the method for determining the coverage layer cell according to any one of claims 1-8.
